# EUROPEAN PATENT APPLICATION

(11) **EP 4 692 904 A1**
(43) Date of publication of application: **11.02.2026**
(21) Application number: 24780796.9
(22) Date of filing: 29.03.2024
(51) Int. Cl.: G02C 7/00, G02B 1/115, G02C 7/02, G02C 7/10

(54) **SPECTACLE LENS AND SPECTACLES**

(30) Priority: 31.03.2023 JP 2023058666
(71) Applicant: Hoya Lens Thailand Ltd., Pathumthani 12130 (TH)
(72) Inventor: KAWAJI, Munenori, Tokyo 160-8347 (JP); UEDA, Kyosuke, Tokyo 160-8347 (JP)
(74) Representative: Hoffmann Eitle
(86) International application number: PCT/JP2024/013021
(87) International publication number: WO 2024/204701

(57) **Abstract**

Provided is a spectacle lens including a lens substrate and a multilayer film located on at least one surface of the lens substrate, in which an average reflectance with respect to light incident at 65° in a wavelength range of 400 to 700 nm on the spectacle lens surface side having the multilayer film is 7.0% or less.

## Description

### Technical Field

The present invention relates to a spectacle lens and spectacles.

### Background Art

Spectacle lenses are generally manufactured by forming a functional film on the surface of a lens substrate to impart desired functions to the lens. As such a functional film, it is known to provide a multilayer film on the surface of the lens substrate (see, for example, PTL 1 and PTL 2).

### Citation List

### Patent Literature

PTL 1: Japanese Patent Application Publication No. 2015-007695
PTL 2: Japanese Patent No. 7145848

### Summary of Invention

### Technical Problem

In recent years, various products featuring various functions have been proposed and sold in the market of spectacle lenses. As a desirable matter for providing a spectacle lens having a higher added value in the market, good visibility can be mentioned.

An object of one aspect of the present invention is to provide a spectacle lens having good visibility.

### Solution to Problem

In measuring reflection characteristics, the incident angle of the incident light is up to 45° in PTL 1 and up to 50° in PTL 2. With respect to this, through extensive study, the present inventors conceived that controlling the reflection characteristics with respect to light incident at wider angles could contribute to improving the visibility with spectacle lenses. As a result of diligent investigation, the present inventors newly discovered that by controlling the reflection characteristics with a multilayer film so that the average reflectance with respect to light incident at 65° in the wavelength range of 400 to 700 nm on the spectacle lens surface is 7.0% or less, it becomes possible to improve the visibility with the spectacle lens, for example, making it less likely for the spectacle wearer to perceive reflected light from illumination.

One aspect of the present invention is as follows.
[1] A spectacle lens including a lens substrate, and a multilayer film located on at least one surface of the lens substrate, in which
   an average reflectance with respect to light incident at 65° in a wavelength range of 400 to 700 nm on the spectacle lens surface side having the multilayer film is 7.0% or less.
[2] The spectacle lens according to [1], in which an average reflectance with respect to light incident at 65° in a wavelength range of 280 to 380 nm on the spectacle lens surface side having the multilayer film is 7.0% or less.
[3] The spectacle lens according to [1] or [2], in which an average reflectance with respect to light incident at 0° in a wavelength range of 400 to 700 nm on the spectacle lens surface side having the multilayer film is 1.0% or less.
[4] The spectacle lens according to any one of [1] to [3], in which the multilayer film includes one or more high-refractive index layers and one or more low-refractive index layers, and
   one or more of the low-refractive index layers are layers having a refractive index of 1.20 or more and 1.38 or less.
[5] The spectacle lens according to any one of [1] to [4], in which the multilayer film includes one or more high-refractive index layers and one or more low-refractive index layers, and
   one or more of the high-refractive index layers are layers having a refractive index of 2.00 or more and 2.40 or less.
[6] The spectacle lens according to any one of [1] to [5], in which the multilayer film includes one or more high-refractive index layers and one or more low-refractive index layers, and
   one or more of the low-refractive index layers are layers having a refractive index of 1.44 or more and 1.49 or less.
[7] The spectacle lens according to any one of [1] to [6], in which the multilayer film includes one or more high-refractive index layers and one or more low-refractive index layers, and
   a total number of layers of the high-refractive index layers and the low-refractive index layers are seven or more.
[8] The spectacle lens according to any one of [1] to [7], in which an average reflectance with respect to light incident at 65° in a wavelength range of 280 to 380 nm on the spectacle lens surface side having the multilayer film is 7.0% or less, and an average reflectance with respect to light incident at 0° in a wavelength range of 400 to 700 nm is 1.0% or less,
   the multilayer film includes one or more high-refractive index layers and one or more low-refractive index layers,
   one or more of the low-refractive index layers are layers having a refractive index of 1.20 or more and 1.38 or less,
   one or more of the high-refractive index layers are layers having a refractive index of 2.00 or more and 2.40 or less,
   one or more of the low-refractive index layers are layers having a refractive index of 1.44 or more and 1.49 or less, and
   a total number of layers of the high-refractive index layers and the low-refractive index layers are seven or more.
[9] Spectacles including the spectacle lens according to any one of [1] to [8].

### Advantageous Effects of Invention

According to one aspect of the present invention, a spectacle lens with which visibility is good can be provided. In addition, according to one aspect of the present invention, it is possible to provide spectacles including the spectacle lens.

### Description of Embodiments

Definitions of terms and/or measurement methods of the present invention will be described hereinbelow.

The "object-side surface" is the surface positioned on the object side when spectacles having spectacle lenses are worn by a wearer. The "eyeball-side surface" is the surface on the other side, namely the surface positioned on the eyeball side when spectacles having spectacle lenses are worn by a wearer.

The reflectance can be measured, for example, at a pitch of 1 to 5 nm. In addition, the average reflectance in a certain wavelength region is an arithmetic average of the reflectances obtained in the wavelength region.

The "light incident at 0°" is a reflectance for light normally incident toward the spectacle lens surface to be measured. With regard to the incident angle of light entering the surface to be measured, the incident angle of perpendicular incidence light is, strictly speaking, 0°. However, from the viewpoint of the measurement optical system, some reflectance measurement devices may use incident light with an incident angle of approximately 0° to 5° as perpendicular incidence light. Such cases are also included in "light incident at 0°" and "normally incident" in the present invention and the present specification.

The "light incident at 65°" is light obliquely incident on the surface of the spectacle lens to be measured at an incident angle of 65°.

The incident angle of light during reflectance measurement can be set by a reflectance measurement device.

The reflectance can be measured, for example, at a pitch of 1 to 5 nm. In addition, the average reflectance in a certain wavelength region is an arithmetic average of the reflectances obtained in the wavelength region.

In addition, some reflectance measurement devices may be affected by multiple reflections between a surface to be measured and an opposing surface. In such a case, multiple reflection may be suppressed by applying a treatment (for example, a black coating treatment or the like) for absorbing or scattering light rays to the opposing surfaces.

The "film thickness" described in the present specification is a physical film thickness. The film thickness can be determined by a known film thickness measurement method. For example, the film thickness can be determined by converting the optical film thickness measured with an optical film thickness measuring device into the physical film thickness.

### [Spectacle Lens]

Hereinafter, a spectacle lens according to one aspect of the present invention will be described in more detail.

### <Multilayer Film>

The spectacle lens has a multilayer film on at least one surface of a lens substrate. The lens substrate may have a multilayer film only on the object-side surface of the lens substrate, may have a multilayer film only on the eyeball-side surface of the lens substrate, or may have a multilayer film on each of the object-side surface and the eyeball-side surface of the lens substrate. In a case where the multilayer films are respectively located on both sides of the lens substrate, these multilayer films can be the same multilayer film or a different multilayer film.

The multilayer film may be located directly on the surface of the lens substrate or indirectly on the surface of the lens substrate via one or more other layers. Examples of the layer that can be formed between the lens substrate and the multilayer film may include a polarizing layer, a light control layer and a hard coat layer. By providing the hard coat layer, the durability (strength) of the spectacle lens can be enhanced. The hard coat layer may be, for example, a cured layer generated by curing a curable composition. For the details on the hard coat layer, see, for example, paragraphs 0025 to 0028 and 0030 of Japanese Patent Application Publication No. 2012-128135. In addition, a primer layer for improving adhesive property may be formed between the lens substrate and the multilayer film. For the details on the primer layer, see, for example, paragraphs 0029 and 0030 of Japanese Patent Application Publication No. 2012-128135.

The multilayer film can have a laminated structure in which high-refractive index layers and low-refractive index layers are alternately laminated. In the present invention and the present specification, the terms "high" and "low" in relation to the high-refractive index layer and the low-refractive index layer included in the multilayer film are used as relative expressions with respect to the refractive index of the lens substrate included in the spectacle lens. The high-refractive index layer means a layer having a higher refractive index than the lens substrate. The low-refractive index layer means a layer having a lower refractive index than the lens substrate. The multilayer film may include three or more layers having different refractive indices. In the present invention and this specification, the "refractive index" refers to the refractive index with respect to light having a wavelength of 500 nm. The lens substrate of the spectacle lens generally has a refractive index of about 1.50 to 1.76, the low-refractive index layer can be a layer having a refractive index of 1.50 or less, and the high-refractive index layer can be a layer having a refractive index of 1.76 or more.

The refractive index of the high-refractive index layer can be, for example, 2.00 or more and 2.40 or less, and 2.00 or more and 2.20 or less.

For the low-refractive index layer included in the multilayer film, it is preferable that the refractive index of one or more low-refractive index layers be 1.20 or more and 1.38 or less. Hereinafter, a low-refractive index layer having a refractive index of 1.20 or more and 1.38 or less is referred to as an "ultra-low-refractive index layer". The number of layers of the ultra-low-refractive index layer included in the multilayer film can be 0 or more and 2 or less, preferably 0 or more and 1 or less, and more preferably 1 layer. In an aspect, the low-refractive index layer can be located on the outermost layer of the multilayer film.

The multilayer film may also include one or more low-refractive index layers other than the ultra-low-refractive index layer. The refractive index of such a low-refractive index layer can be, for example, 1.44 or more and 1.49 or less.

However, as described above, since the notations "high" and "low" regarding the high-refractive index layer and the low-refractive index layer are relative notations with respect to the refractive index of the lens substrate, the refractive indexes of the high-refractive index layer and the low-refractive index layer are not limited to the above ranges.

A high-refractive index material constituting the high-refractive index layer and a low-refractive index material constituting the low-refractive index layer may respectively be an inorganic material, an organic material or an inorganic/organic composite material and is preferably an inorganic material from the viewpoint of film-forming properties and the like. That is, the multilayer film is preferably an inorganic multilayer film. Specifically, examples of the high-refractive index material configuring the high-refractive index layer may include one or a mixture of two or more oxides selected from the group consisting of zirconium oxides (for example, ZrO₂), tantalum oxides (for example, Ta₂O₅), titanium oxides (such as TiO₂), aluminum oxides (Al₂O₃), yttrium oxides (such as Y₂O₃), hafnium oxides (such as HfO₂) and niobium oxides (such as Nb₂O₅). Examples of the low-refractive index material configuring the low-refractive index layer may include one or a mixture of two or more oxides or fluorides selected from the group consisting of silicon oxides (such as SiO₂), magnesium fluorides (such as MgF₂) and barium fluorides (such as BaF₂). In these examples, the oxides and fluorides are indicated by stoichiometric composition, but the oxides and fluorides including oxygen or fluoride in an amount less than or more than the stoichiometric amount may also be used for the high-refractive index material or the low-refractive index material.

Preferably, the high-refractive index layer is a film containing the high-refractive index material as a main component, and the low-refractive index layer is a film containing the low-refractive index material as a main component. The main component as used herein is the component that accounts for the most proportion of the film, and is the component that usually accounts for about 50% by mass to 100% by mass, and even about 90% by mass to 100% by mass relative to the mass of the film. The film (for example, a vapor deposition film) can be formed by performing film formation using a film forming material (for example, a vacuum deposition source, a sputtering target, and the like) containing the high-refractive index material or the low-refractive index material as a main component. The same as above applies to the main component with respect to the film forming material. In some cases, the film or the film forming material contains unavoidable impurities. The film or the film forming material may contain other components such as inorganic substances and known additives to assist in film forming within a range of not diminishing the function of the main component.

As a method of forming a multilayer film, a known film forming method can be used. From the viewpoint of ease of film formation, film formation is preferably performed by vapor deposition. That is, each layer included in the multilayer film is preferably a vapor deposition film. The vapor deposition film means a film formed by vapor deposition. The "vapor deposition" in the present invention and the present specification includes a dry method, for example, a vacuum vapor deposition method, an ion plating method, a sputtering method, and the like. In the vacuum vapor deposition method, an ion beam assist method of simultaneously irradiating an ion beam during vapor deposition may be used. As the sputtering method, a direct current (DC) method, a radio frequency (RF) method, or the like may be used. With regard to the ultra-low-refractive index layer, the present inventors have newly found that simultaneous deposition of the vacuum vapor deposition method and the DC sputtering method is preferred for deposition of the ultra-low-refractive index layer. The refractive index of the ultra-low-refractive index layer can be controlled by adjusting the current value at the time of film formation by the vacuum vapor deposition method, the gas flow rate at the time of film formation by the DC sputtering method, the input power, and the like.

The multilayer film can be, for example, a multilayer film in which a high-refractive index layer and a low-refractive index layer are alternately laminated in a total number of seven or more layers. The total number of layers of the high-refractive index layer and the low-refractive index layer can be, for example, 11 or less. The film thickness of the high-refractive index layer and the film thickness of the low-refractive index layer can be decided according to the layer configuration. Specifically, the combination of the layers to be included in the multilayer film and the film thickness of each layer can be decided by optical simulation by a known method based on the refractive indices of the film forming materials for forming the high-refractive index layer and the low-refractive index layer and the physical properties wished to be imparted to the spectacle lens by providing the multilayer film.

The ultra-low-refractive index layer can be a layer containing silicon oxide, and preferably a layer containing silicon oxide as a main component. The multilayer film including such an ultra-low-refractive index layer can include one or more layers including a silicon oxide other than the ultra-low-refractive index layer as a low-refractive index layer. Such a low-refractive index layer is preferably a layer containing silicon oxide as a main component.

Examples of the high-refractive index layer included in the multilayer film include a layer containing a zirconium oxide, a layer containing a niobium oxide, and a layer containing a tantalum oxide, and these layers are preferably layers containing the above oxide as a main component.

In the multilayer film, the high-refractive index layer and the low-refractive index layer may be in direct contact with each other, and at least one laminated structure may be included in which a conductive oxide layer described below exists between the high-refractive index layer and the low-refractive index layer.

The film thickness of each layer of the high-refractive index layer and the low-refractive index layer included in the multilayer film can be, for example, 1 to 500 nm, and the total thickness of the multilayer film can be, for example, 100 to 900 nm(in a case where the conductive oxide layer is included, the thickness of the conductive oxide layer is also included).

In addition to the above-described high-refractive index layer and low-refractive index layer, the multilayer film may include, at an arbitrary position within the multilayer film, one or more layers containing a conductive oxide (also referred to as a "conductive oxide layer"). The conductive oxide layer can be a layer mainly composed of a conductive oxide, and is preferably a vapor deposition film of a conductive oxide formed by deposition using a deposition source mainly composed of a conductive oxide. From the viewpoint of transparency of the spectacle lens, preferred examples of the conductive oxide layer include a tin-doped indium oxide (ITO) layer having a film thickness of 10 nm or less, a tin oxide layer having a film thickness of 10 nm or less, and a titanium oxide layer having a film thickness of 10 nm or less. The term "tin-doped indium oxide (ITO) layer" refers to a layer mainly composed of ITO. This also applies to the tin oxide layer and the titanium oxide layer. In the present invention and specification, the tin-doped indium oxide (ITO) layer having a film thickness of 10 nm or less, the tin oxide layer having a film thickness of 10 nm or less, and the titanium oxide layer having a film thickness of 10 nm or less that are included in the multilayer film shall not be regarded as the "high-refractive index layer" or the "low-refractive index layer". In other words, even if one or more of these layers are included in the multilayer film, these layers are not regarded as the "high-refractive index layer" or "low-refractive index layer". The film thickness of the conductive oxide layer having a thickness of 10 nm or less may be, for example, 0.1 nm or more.

Another functional film may be formed on the multilayer film. Such a functional film may be various functional films such as a water repellent or hydrophilic anti-fouling film and anti-fogging film. A known technique can be applied for these functional films.

### <Reflection Characteristics of Spectacle Lens Surface>

The spectacle lens has an average reflectance of 7.0% or less with respect to light incident at 65° in the wavelength range of 400 to 700 nm on the spectacle lens surface side having the above multilayer film, and preferably 6.5% or less, more preferably 6.0% or less, even more preferably 5.5% or less, and still more preferably 5.0% or less, in that order. The average reflectance with respect to light incident at 65° in the wavelength range of 400 to 700 nm on the spectacle lens surface side having the multilayer film may be, for example, 0.1% or more, 1.0% or more, 2.0% or more, or 3.0% or more. However, from the viewpoint of improving the visibility with the spectacle lens, since the above average reflectance is more preferable the lower it is, the value may also be lower than the values exemplified herein.

From the viewpoint of further improving the visibility, the spectacle lens preferably has an average reflectance of 7.0% or less with respect to light incident at 65° in the wavelength range of 280 to 380 nm on the spectacle lens surface side having the multilayer film, more preferably 6.5% or less, and even more preferably 6.0% or less, 5.5% or less, 5.0% or less, 4.5% or less, and 4.0% or less, in that order. The average reflectance with respect to light incident at 65° in the wavelength range of 280 to 380 nm on the spectacle lens surface side having the multilayer film may be, for example, 0.1% or more, 1.0% or more, 2.0% or more, or 3.0% or more. However, from the viewpoint of improving the visibility with the spectacle lens, since the above average reflectance is more preferable the lower it is, the value may also be lower than the values exemplified herein.

From the viewpoint of further improving the appearance quality, the spectacle lens preferably has an average reflectance of 1.0% or less with respect to light incident at 0° in the wavelength range of 400 to 700 nm on the spectacle lens surface side having the above multilayer film, more preferably 0.8% or less, and even more preferably 0.6% or less and 0.4%, in that order. Regarding the appearance quality, as an example of the good appearance quality of the spectacle lens, it can be mentioned that a third party facing a wearer wearing the spectacles is less likely to be aware of reflected light of the spectacle lens. The average reflectance with respect to light incident at 0° in the wavelength range of 400 to 700 nm on the spectacle lens surface side having the multilayer film may be, for example, 0.1% or more. However, from the viewpoint of improving the appearance quality of the spectacle lens, since the above average reflectance is more preferable the lower it is, the value may also be lower than the values exemplified herein.

From the viewpoint of controlling the various average reflectances described above, the multilayer film preferably includes one or more ultra-low-refractive index layers.

The spectacle lens surfaces having various average reflectances in the above range can be only the object-side surface, only the eyeball-side surface, or both the object-side surface and the eyeball-side surface. From the viewpoint of further improvement of visibility and/or from the viewpoint of improving both visibility and appearance quality, it is preferred that both the object-side surface and the eyeball-side surface of the spectacle lens have various average reflectances in the above range. In this case, the reflection characteristics of both surfaces may be the same or different.

### <Lens Substrate>

The lens substrate of the spectacle lens can be a plastic lens substrate or a glass lens substrate. For example, the glass lens substrate can be a lens substrate made of inorganic glass. The lens substrate is preferably a plastic lens substrate because it is lightweight and resistant to breakage. Examples of plastic lens substrates include (meth)acrylic resins, styrene resins, polycarbonate resins, allyl resins, allyl carbonate resins such as diethylene glycol bisallyl carbonate resins (CR-39), vinyl resins, polyester resins, polyether resins, urethane resins obtained by reacting an isocyanate compound with a hydroxy compound such as diethylene glycol, thiourethane resins obtained by reacting an isocyanate compound with a polythiol compound, and cured products (generally referred to as transparent resins) obtained by curing a curable composition containing a (thio)epoxy compound having one or more disulfide bonds in the molecule. The curable composition can also be referred to as a polymerizable composition. The lens substrate may contain a known additive. Examples of the additive may include an ultraviolet absorber. The lens substrate containing an ultraviolet absorber can reduce the amount of ultraviolet light entering from the object-side surface and then entering the eye of a spectacle wearer.

As the lens substrate, an undyed substrate (colorless lens) may be used or a dyed substrate (dyed lens) may be used. The refractive index of the lens substrate may be, for example, about 1.50 to 1.76. However, the refractive index of the lens substrate is not limited to the above range, and may be within the above range or may be above or below outside of the above range. In addition, the lens substrate may be a lens with optical power (so-called prescription lens) or a lens without optical power (so-called non-prescription lens).

This spectacle lens can be various lenses including a monofocal lens, a multifocal lens and a progressive power lens. The type of the lens is normally determined by the surface shapes of both surfaces of the lens substrate. The surface of the lens substrate may be a convex surface, a concave surface, or a flat surface. In a general lens substrate and spectacle lens, the object-side surface is a convex surface and the eyeball-side surface is a concave surface. However, the present invention is not limited thereto.

### [Spectacles]

Another aspect of the present invention relates to spectacles having the spectacle lens according to the above-mentioned aspect of the present invention. Details of the spectacle lens included in the spectacles are as described above. By including the spectacle lens in the spectacles, good appearance can be provided. The configuration of the spectacles such as a frame is not especially limited, and a known technique may be applied.

### Example

Hereinafter, the present invention will be described in more detail by way of examples. However, the present invention is not limited to embodiments shown in examples.

### [Method of Forming Multilayer Film]

In Examples 1 to 5 and Comparative Examples 1 and 2, on both the eyeball side and the object side, the multilayer vapor deposition film was formed by sequentially laminating the first layer, second layer, and so on, using the deposition sources shown from top to bottom in the table shown later, in order from the lens substrate side (hard coat side) toward the spectacle lens surface side, so that the outermost layer on the spectacle lens surface side would be the layer formed using the deposition source shown in the lowermost row of each table. In the examples and the comparative examples, the deposition sources containing the oxides indicated in the table excluding impurities that could be unavoidably contaminated were used, and each layer having the thickness indicated in the table was sequentially formed. The film thickness is a physical thickness, and the unit is nanometers (nm). In the following tables, a layer described as an "ultra-low-refractive index layer" is a layer having a refractive index of 1.20 or more and 1.38 or less as measured by a method described later.

In Examples 1 to 5 and Comparative Examples 1 and 2, a multilayer vapor deposition film having the layer structure shown in the table below was formed on each hard coat surface on the convex surface side (object side) and the concave surface side (eyeball side) of a plastic lens substrate (colorless lens) in which both surfaces were optically finished and previously provided with a hard coat (indicated as "HC" in the table shown later), the object-side surface being a convex surface and the eyeball-side surface being a concave surface.

Each layer not corresponding to the ultra-low-refractive index layer was formed by an ion beam assist method using oxygen gas and argon gas as assist gases.

A method of forming a layer confirmed to be an ultra-low-refractive index layer in Examples 1 to 5 will be described later.

Hereinafter, a layer that does not correspond to the ultra-low-refractive index layer and is formed using a SiO₂ vapor deposition source will be referred to as a "SiO₂ layer", and a layer formed using a ZrO₂ vapor deposition source will be referred to as a "ZrO₂ layer". The layer formed using the SnO₂ vapor deposition source is a conductive oxide layer. A layer that is confirmed to be an ultra-low-refractive index layer and is formed using a SiO₂ vapor deposition source is referred to as a "SiO₂ ultra-low-refractive index layer".

### [Refractive Index of Each Layer]

The refractive index of each layer was determined by the following method.

A single-layer film was formed on the glass substrate under the same film forming conditions as those of each layer of the multilayer film to obtain a laminate of the glass substrate and the single-layer film.

The surface reflectance of the surface of the laminate on which the single-layer film was formed was measured with a lens reflectance measurement device USPM-RU manufactured by Olympus Corporation, and the refractive index was obtained by optical thin film analysis of the obtained spectral reflectance.

The refractive index of each layer other than the ultra-low-refractive index layer in the multilayer films prepared in examples and comparative examples was the following value.
SiO₂ layer: 1.47
ZrO₂ layer: 2.08

In the multilayer film prepared in Examples 1 to 4, the refractive indices of the SiO₂ ultra-low-refractive index layers obtained by the above method were as following values.
SiO₂ porous layer of Example 1 (object side and eyeball side): 1.23
SiO₂ porous layer of Example 2 (object side and eyeball side): 1.23
SiO₂ porous layer of Example 3 (object side and eyeball side): 1.38
SiO₂ porous layer of Example 4 (object side and eyeball side): 1.38

### [Reflection Characteristics of Spectacle Lens Surface]

On both the object-side surface and the eyeball-side surface of each of the spectacle lenses of Examples 1 to 5 and Comparative Examples 1 and 2, reflection characteristics at the optical center with respect to normal incidence (that is, with respect to light incident at 0°) and with respect to light incident at 65° were measured. The measurements were performed using a spectrophotometer UH4150 manufactured by Hitachi High-Tech Corporation (measurement pitch: 1 nm, and measurement conditions set to normal incidence or an incident angle of 65°).

From the reflection characteristics measured as described above, the average reflectance with respect to light incident at 65° in the wavelength range of 400 to 700 nm, the average reflectance with respect to light incident at 0° in the wavelength range of 400 to 700 nm, and the average reflectance with respect to light incident at 65° in the wavelength range of 280 to 380 nm were each determined. In all examples and comparative examples, the same multilayer film was formed on the object side and the eyeball side, and thus the reflection characteristics obtained on both surfaces were the same.

### [Example 1]

Both the SiO₂ ultra-low-refractive index layers on the object side and the eyeball side were formed by simultaneous film formation of a vacuum vapor deposition method and a DC sputtering method using oxygen gas and argon gas. The current value at the time of film formation by the vacuum vapor deposition method is 250 mA, and the gas flow rate at the time of film formation by the DC sputtering method is oxygen gas: 500 sccm, argon gas: 1000 sccm, and the input power was set to 500 W.

**[Table 1]**

| Example 1: Layer Configuration of Multilayer Film | |
|---|---|
| Lens substrate | |
| HC | 3000 |
| SiO₂ | 182 |
| ZrO₂ | 13 |
| SiO₂ | 27 |
| ZrO₂ | 109 |
| SiO₂ | 36 |
| ZrO₂ | 13 |
| SiO₂ ultra-low-refractive index layer | 119 |

### [Example 2]

Both the SiO₂ ultra-low-refractive index layers on the object side and the eyeball side were formed by simultaneous film formation of a vacuum vapor deposition method and a DC sputtering method using oxygen gas and argon gas. The current value at the time of film formation by the vacuum vapor deposition method is 250 mA, and the gas flow rate at the time of film formation by the DC sputtering method is oxygen gas: 500 sccm, argon gas: 1000 sccm, and the input power was set to 500 W.

**[Table 2]**

| Example 2: Layer Configuration of Multilayer Film | |
|---|---|
| Lens substrate | |
| HC | 3000 |
| SiO₂ | 42 |
| ZrO₂ | 2 |
| SiO₂ | 291 |
| ZrO₂ | 7 |
| SiO₂ | 105 |
| ZrO₂ | 6 |
| SiO₂ ultra-low-refractive index layer | 123 |

### [Example 3]

Both the SiO₂ ultra-low-refractive index layers on the object side and the eyeball side were formed by simultaneous film formation of a vacuum vapor deposition method and a DC sputtering method using oxygen gas and argon gas. The current value at the time of film formation by the vacuum vapor deposition method is 250 mA, and the gas flow rate at the time of film formation by the DC sputtering method is oxygen gas: 150 sccm, argon gas: 150 sccm and the input power was 1000 W.

**[Table 3]**

| Example 3: Layer Configuration of Multilayer Film | |
|---|---|
| Lens substrate | |
| HC | 3000 |
| SiO₂ | 163 |
| ZrO₂ | 14 |
| SiO₂ | 29 |
| ZrO₂ | 91 |
| SiO₂ | 8 |
| ZrO₂ | 24 |
| SiO₂ ultra-low-refractive index layer | 89 |

### [Example 4]

Both the SiO₂ ultra-low-refractive index layers on the object side and the eyeball side were formed by simultaneous film formation of a vacuum vapor deposition method and a DC sputtering method using oxygen gas and argon gas. The current value at the time of film formation by the vacuum vapor deposition method is 250 mA, and the gas flow rate at the time of film formation by the DC sputtering method is oxygen gas: 150 sccm, argon gas: 150 sccm and the input power was 1000 W.

**[Table 4]**

| Example 4: Layer Configuration of Multilayer Film | |
|---|---|
| Lens substrate | |
| HC | 3000 |
| SiO₂ | 3 |
| ZrO₂ | 3.1 |
| SiO₂ | 234.42 |
| ZrO₂ | 14.89 |
| SiO₂ | 59.61 |
| ZrO₂ | 19.95 |
| SiO₂ ultra-low-refractive index layer | 136.49 |

### [Example 5]

**[Table 5]**

| Example 5: Layer Configuration of Multilayer Film | |
|---|---|
| Substrate | |
| HC | 3000 |
| SiO₂ | 15 |
| ZrO₂ | 5.77 |
| SiO₂ | 260.29 |
| ZrO₂ | 30.59 |
| SiO₂ | 20.86 |
| ZrO₂ | 75.89 |
| SiO₂ | 106.55 |

### [Comparative Example 1]

**[Table 6]**

| Comparative Example 1: Layer Configuration of Multilayer Film | |
|---|---|
| Lens substrate | |
| HC | 3000 |
| SiO₂ | 40 |
| ZrO₂ | 4 |
| SiO₂ | 470 |
| ZrO₂ | 13 |
| SiO₂ | 21 |
| ZrO₂ | 105 |
| SnO₂ | 5 |
| SiO₂ | 80 |

### [Comparative Example 2]

**[Table 7]**

| Comparative Example 2: Layer Configuration of Multilayer Film | |
|---|---|
| Lens substrate | |
| HC | 3000 |
| SiO₂ | 32 |
| ZrO₂ | 2 |
| SiO₂ | 380 |
| ZrO₂ | 14 |
| SiO₂ | 31 |
| ZrO₂ | 110 |
| SnO₂ | 5 |
| SiO₂ | 82 |

**[Table 8]**

| | Comparative Examaple 1 | Comparative Example 2 | Example 1 | Example 2 | Example 3 | Example 4 | Example 5 |
|---|---|---|---|---|---|---|---|
| 400nm^{~} 700nm Average reflectance (65° ) | 9.0 | 8.5 | 3.3 | 4.5 | 7.0 | 6.3 | 6.5 |
| 280nm~380nm Average reflectance (65° ) | 7.2 | 8.2 | 3.1 | 3.9 | 5.6 | 14.3 | 24.3 |
| 400nm~700nm Average reflectance (0° ) | 0.7 | 0.5 | 0.6 | 0.2 | 0.2 | 1.3 | 2.2 |

### [Evaluation Method]

Spectacles including respective spectacle lenses of examples and comparative examples shown in Table 9 were prepared.

For each pair of spectacles, a sensory evaluation was conducted by 10 subjects for each of the evaluation items (1) to (3) shown in Table 9. In the sensory evaluation, for each evaluation item, the subjects assigned a score as follows: agree (5 points), somewhat agree (4 points), neither (3 points), somewhat disagree (2 points), and disagree (1 point). The arithmetic average of the scores given by the 10 subjects is shown in Table 9. It can be said that the higher the score shown in the table, the better the evaluation result.

**[Table 9]**

| | Comparative Example 1 | Example 2 | Example 4 |
|---|---|---|---|
| (1) When working in an office with overhead fluorescent lighting, the reflection of the fluorescent light from the spectacle lens is not noticeable. | 1 | 5 | 4 |
| (2) When wearing the spectacles, the scenery appears clear and vivid. | 3 | 5 | 2 |
| (3) When facing a person wearing the spectacles, the reflection of the spectacle lens is not noticeable. | 2 | 5 | 3 |

Various aspects described in the present specification may be combined in any combination of two or more.

The embodiments disclosed herein are only examples in all respects and should not be considered as restrictive. The scope of the present invention is not limited to the above description, but is defined by the scope of claims, and is intended to encompass equivalents to the scope of claims and all modifications within the scope of the claims.

### Industrial Applicability

The present invention is useful in the manufacturing fields of spectacle lenses and spectacles.

## Claims

1. A spectacle lens comprising:
a lens substrate; and
a multilayer film located on at least one surface of the lens substrate, wherein
an average reflectance with respect to light incident at 65° in a wavelength range of 400 to 700 nm on the spectacle lens surface side having the multilayer film is 7.0% or less.

2. The spectacle lens according to claim 1, wherein an average reflectance with respect to light incident at 65° in a wavelength range of 280 to 380 nm on the spectacle lens surface side having the multilayer film is 7.0% or less.

3. The spectacle lens according to claim 1, wherein an average reflectance with respect to light incident at 0° in a wavelength range of 400 to 700 nm on the spectacle lens surface side having the multilayer film is 1.0% or less.

4. The spectacle lens according to claim 1, wherein the multilayer film includes one or more high-refractive index layers and one or more low-refractive index layers, and
one or more of the low-refractive index layers are layers having a refractive index of 1.20 or more and 1.38 or less.

5. The spectacle lens according to claim 1, wherein the multilayer film includes one or more high-refractive index layers and one or more low-refractive index layers, and
one or more of the high-refractive index layers are layers having a refractive index of 2.00 or more and 2.40 or less.

6. The spectacle lens according to claim 1, wherein the multilayer film includes one or more high-refractive index layers and one or more low-refractive index layers, and
one or more of the low-refractive index layers are layers having a refractive index of 1.44 or more and 1.49 or less.

7. The spectacle lens according to claim 1, wherein the multilayer film includes one or more high-refractive index layers and one or more low-refractive index layers, and
a total number of layers of the high-refractive index layers and the low-refractive index layers are seven or more.

8. The spectacle lens according to claim 1, wherein an average reflectance with respect to light incident at 65° in a wavelength range of 280 to 380 nm on the spectacle lens surface side having the multilayer film is 7.0% or less, and an average reflectance with respect to light incident at 0° in a wavelength range of 400 to 700 nm is 1.0% or less,
the multilayer film includes one or more high-refractive index layers and one or more low-refractive index layers,
one or more of the low-refractive index layers are layers having a refractive index of 1.20 or more and 1.38 or less,
one or more of the high-refractive index layers are layers having a refractive index of 2.00 or more and 2.40 or less,
one or more of the low-refractive index layers are layers having a refractive index of 1.44 or more and 1.49 or less, and
a total number of layers of the high-refractive index layers and the low-refractive index layers are seven or more.

9. Spectacles comprising: the spectacle lens according to any one of claims 1 to 8.
